# EUROPEAN PATENT SPECIFICATION

(11) **EP 4 562 270 B1**
(45) Date of publication and mention of the grant of the patent: **22.07.2026**
(21) Application number: 23748048.8
(22) Date of filing: 25.07.2023
(51) Int. Cl.: E21B 33/035, E21B 33/06, E21B 34/02, E21B 34/04, F16K 31/04, E21B 33/038, E21B 41/04

(54) **ACTUATOR, RECEPTACLE, AND ACTUATOR ASSEMBLY THEREFOR**
AKTUATOR, BEHÄLTER UND AKTUATORANORDNUNG DAFÜR
ACTIONNEUR, RÉCEPTACLE ET ENSEMBLE D'ACTIONNEMENT ASSOCIÉ

(30) Priority: 26.07.2022 NO 20220829
(43) Date of publication of application: 04.06.2025
(73) Proprietor: TechnipFMC Norge AS, 3601 Kongsberg (NO)
(72) Inventor: MAGNUS, Heyn H., 3601 Kongsberg (NO); BHAT, Deviprasad, 3601 Kongsberg (NO); MATHISEN, Stig Fredrik, 3601 Kongsberg (NO); ROKNE, Øyvind, 3601 Kongsberg (NO); BRAUTI, Espen, 3601 Kongsberg (NO); HARM, Morten, 3601 Kongsberg (NO)
(74) Representative: Murgitroyd & Company
(86) International application number: PCT/EP2023/070527
(87) International publication number: WO 2024/023062

(56) References cited:
- WO-A1-2011/006519
- WO-A1-2011/009471
- WO-A1-2019/141595
- GB-A- 2 596 540
- US-A1- 2007 095 411
- US-A1- 2019 085 651

## Description

### Technical Field

The present disclosure relates to electric actuators for subsea valves, preferably used in the oil and gas industry. More particularly, the present disclosure relates to an actuator assembly for those valves and components that may be used in that assembly, including an actuator, a receptacle and versions of a locking nut.

### Background

Valve assemblies known as Christmas (X-mas) trees are assemblies which are used to regulate the flow of fluid from an oil well. They may for example be used to control the flow of oil emanating from the well or to introduce an additive to the flow of oil. There are also valves for controlling flow in manifolds and other subsea structures.

These valve assemblies include actuators which are attached to the valve body and thereby to the X-mas tree or subsea structure, and mechanically connected to a drive element of a valve element located within the tree or other subsea structure. These actuators are conventionally bolted to the X-mas tree or the structure, or attached with one or more clamps. US2019/085651 discloses a subsea electric actuator system and US2007/095411 discloses a fast closing well choke. These may be useful for understanding the background.

A technical problem associated with the known clamps is that the clamps are cumbersome and difficult to put in position, especially when a Remotely Operated Vehicle (ROV) is used to position the clamps. This means that when an actuator needs to be replaced or serviced, frequently equipment can be lost or damaged when the clamps are removed/deployed.

A further technical problem associated with the clamps is that they can be difficult to disengage from the assembly in the case of an emergency.

A further technical problem is that the actuator, as it is made of metal, tends to rust quickly, meaning frequent service/replacement operations are required.

A further technical problem is that in a subsea assembly calcium deposits can find their way into gaps and passages of the assembly, making the assembly difficult to disassemble.

It is an object of the present invention to mitigate/obviate one or more problems with existing actuator assemblies.

### Summary of the Invention

According to a first aspect of the present invention, there is provided an actuator for a cathodically protected subsea valve having a guide rod extending therefrom, the actuator comprising:
an actuator housing;
an electric motor located within the actuator housing;
a drive mechanism adapted to be driven by the electric motor and engagable with the subsea valve; and
a guide element on the actuator housing, the guide element comprising an elongate guide passage for receiving the guide rod, wherein the guide element comprises at least one bracket mounted on the housing and a tube supported by the bracket, wherein the bracket and actuator housing are made of metal and the bracket is mounted on the housing such that electrons may flow from the bracket to the actuator housing.

According to at least one embodiment of the first aspect, the guide passage may comprise proximal and distal openings, and the distal opening is provided with an inwardly tapered contact surface.

When we refer to "distal and proximal" we mean with reference to the main body of the subsea valve when the assembly is in use and connected to the main body. For example, the proximal end of the receptacle housing is more proximate the main body of the valve than the distal end of the receptacle housing in use when the proximal end is connected to the main body of the subsea valve.

According to at least one embodiment of the first aspect, the actuator may comprise a single guide element. This one single guide element has an orientation that is mainly horizontal and that is positioned vertically above the actuator housing when the actuator housing is in an installed position connected to the valve. This gives the possibility of additional guiding of the actuator housing with respect to the valve by gravity.

According to at least one embodiment of the first aspect, the actuator housing may in an installed position be in electric contact with the X-mas tree or manifold of the other subsea structure, and be protected by the cathodic protection system already installed on that subsea structure.

According to at least one embodiment of the first aspect, the elongate guide passage may contain a retaining element engageable with a portion of the guide rod.

According to a second aspect of the present invention, there is provided a receptacle for connecting an actuator to a cathodically protected subsea valve, the receptacle comprising
a receptacle housing having proximal and distal ends and an internal chamber, wherein the proximal end is connectable to a body of the valve such that a drive element of the valve is at least partly located in the internal chamber; and the distal end is adapted to receive at least part of a drive mechanism of the actuator such that the drive mechanism and drive element engage within the internal chamber; and
a guide rod on the receptacle housing, the guide rod extending parallel to the receptacle housing, wherein the receptacle housing and guide rod are made of metal, and the guide rod is mounted on the receptacle housing such that a current of electrons may flow from the housing to the guide rod. According to another aspect this guide rod may be attached directly to the valve body or subsea structure as such.

According to at least one embodiment of the second aspect, the receptacle housing may in an installed position be in electric contact with the X-mas tree, or manifold of the other subsea structure, and be protected by the cathodic protection system already installed on that X-mas tree or subsea structure.

According to at least one embodiment of the second aspect, the guide rod may be provided with a threaded portion for engaging a corresponding threaded portion of a locking nut.

According to at least one embodiment of the second aspect, the guide rod may have a free end remote from the receptacle housing, wherein the threaded portion may be a threaded bore which extends longitudinally in the direction of the receptacle housing from the free end.

According to at least one embodiment of the second aspect, the receptacle may comprise a single guide rod.

According to at least one embodiment of the second aspect, the guide rod may have an internal passage having an inlet connectable to a source of anti-calcification fluid and at least one outlet on the outer surface of the rod.

According to at least one embodiment of the second aspect, the at least one outlet may be longitudinally spaced apart from the free end of the rod.

According to a third aspect of the present invention, there is provided an actuator assembly for a cathodically protected subsea valve, comprising:
an actuator comprising:
an actuator housing;
an electric motor located within the actuator housing;
a drive mechanism adapted to be driven by the electric motor and engagable with the subsea valve; and
a guide element on the actuator housing, the guide element comprising an elongate guide passage; and

a receptacle comprising:
   a receptacle housing having proximal and distal ends and an internal chamber, wherein the proximal end is connectable to a body of the valve such that a drive element of the valve is at least partly located in the internal chamber; and the distal end is adapted to receive at least part of the drive mechanism of the actuator such that the drive mechanism and drive element engage within the internal chamber; and
a guide rod on the receptacle housing, the guide rod extending parallel to the receptacle housing and being removably secured within the guide passage of the actuator. Each of the actuator housing, receptacle housing, guide element and guide rod is made of metal, wherein the guide element and guide rod are mounted upon their respective housings and the guide rod secured within the passage such that a current of electrons may flow from the receptacle housing to the actuator housing via the guide rod.

According to at least one embodiment of the third aspect, the guide rod may have an internal passage having an inlet connectable to a source of anti-calcification fluid and at least one outlet on the outer surface of the rod, and wherein the guide rod may be secured within the guide passage such that an annular space is formed between the guide rod and the guide passage, wherein the annular space may be in communication with the at least one outlet.

According to at least one embodiment of the third aspect, the assembly may comprise a locking nut with a threaded portion, wherein the guide rod may further comprise a corresponding threaded portion, wherein the threaded portion of the locking nut may engage the corresponding threaded portion of the guide rod to removably secure the guide rod within the passage.

According to at least one embodiment of the third aspect, the passage may have an inlet and an outlet, wherein the guide rod may extend through the passage such that a protruding portion of the guide rod extends beyond the outlet of the passage and the locking nut may engage the protruding part of the guide rod such that the locking nut bears against the guide element to removably secure the guide rod within the passage.

According to at least one embodiment of the third aspect, the guide passage may comprise proximal and distal openings and the distal opening may be provided with an inwardly tapered contact surface, wherein the locking nut may comprise first and second ends and an outwardly tapered contact surface which tapers outwardly from the first end of the locking nut towards the second end of the locking nut, wherein the outwardly tapered contact surface may be in contact with the inwardly tapered contact surface.

According to at least one embodiment of the third aspect, the guide rod may have a free end remote from the receptacle housing, wherein the free end may have a threaded bore which extends longitudinally in the direction of the receptacle housing, wherein the threaded bore may be the corresponding threaded portion of the guide rod, wherein the locking nut may have a threaded element, wherein the threaded element may be the threaded portion of the locking nut and the threaded element may be adapted to enter and engage with the threaded bore such that the locking nut removably secures the actuator to the guide rod and receptacle.

According to at least one embodiment of the third aspect, the threaded element may be biased in a first direction.

According to at least one embodiment of the third aspect, the guide rod may extend into the passage in a forward direction, and the nut may engage the guide rod such that the nut presses against a guide contact surface of the guide element which prevents movement of the nut in a rearward direction.

The forward direction may extend away from the X-mas tree in use. For example, the whole assembly may extend in the forward direction from a proximal end thereof attached to the X-mas tree in use to a distal end thereof. The rearward direction is opposite the forward direction.

According to at least one embodiment of the third aspect, the locking nut may have a nut bore and the guide rod may extend into the nut bore.

According to at least one embodiment of the third aspect, the actuator may be an actuator in accordance with the first aspect.

According to at least one embodiment of the third aspect, the receptacle may be a receptacle in accordance with the second aspect.

According to a fourth aspect of the present invention, there is provided a subsea valve comprising an actuator assembly in accordance with the third aspect.

According to at least one embodiment of the fourth aspect, the valve may be located on a base surface, wherein the guide rod may be located above the receptacle housing with respect to the base surface and the guide element may be located above the actuator housing with respect to the base surface.

According to a fifth aspect of the present invention, there is provided a subsea valve assembly comprising at least one subsea valve in accordance the fourth aspect.

According to a sixth aspect not part of the present invention, there is provided a locking nut for locking a subsea unit relative to a guide rod fixed to a subsea installation, comprising:
a body having a bore; and
a locking element with a threaded portion., wherein the body has first and second ends, wherein the body includes a tapered contact surface which tapers outwardly from the first end towards the second end.

According to at least one embodiment of the sixth aspect, the locking element may be located within the bore and the threaded portion may be an externally threaded portion.

According to at least one embodiment of the sixth aspect, the bore may extend from an entrance thereof into the body, wherein the entrance may be provided at the first end of the body, wherein the locking element may be biased within the bore in a first direction by a biasing member towards the entrance of the bore.

According to at least one embodiment of the sixth aspect, the locking element may be arranged within the bore such that the locking element can be rotated with respect to the body.

According to at least one embodiment of the sixth aspect, the bore may comprise first and second bore portions and a passage which connects the first and second bore portions, wherein a head of the locking element may be held within the second bore portion such that axial movement of the head is limited by the second bore portion, wherein the head of the locking element is supported within the second bore portion by a rotatable socket component, wherein the rotatable socket component may engage the head of the locking element and the biasing member may be held between the socket component and the locking element head such that the biasing element biases the head in the axial direction towards the first bore portion.

According to at least one embodiment of the sixth aspect, the body has a multi-sided profile for interaction with an external tool.

According to at least one embodiment of the sixth aspect, the threaded portion of the locking element defines a screw axis of the locking element, wherein the screw axis of the locking element is co-axial with a bore axis of the bore.

According to at least one embodiment of the sixth aspect, the whole locking element is located within the bore.

According to a seventh aspect not part of the present invention, there is provided an assembly comprising:
a subsea unit comprising an elongate passage;
a guide rod fixed to a subsea installation and secured within the elongate passage; and
the locking nut of any preceding claim, the threaded portion of the locking element engaging a corresponding threaded portion of the guide rod such that the tapered contact surface of the nut bears against a corresponding contact surface of the subsea unit and the guide rod is secured within the passage.

According to at least one embodiment of the seventh aspect, the elongate passage may have an inlet and an outlet and the guide rod may extend through the elongate passage such that a protruding part of the guide rod extends beyond the outlet, wherein the protruding part of the guide rod comprises the corresponding threaded portion of the guide rod.

According to an eighth aspect not part of the present invention, there is provided a locking nut for locking a subsea unit relative to a guide rod fixed to a subsea installation, comprising:
a body with a bore,
wherein the body comprises first and second parts which are detachable from one another.

According to at least one embodiment of the eighth aspect, together the first and second parts may define the bore.

According to at least one embodiment of the eighth aspect, the body may be arranged to split longitudinally when the first and second parts detach from one another.

According to at least one embodiment of the eighth aspect, the body may extend between first and second ends thereof, wherein each of the first and second parts may extend between the first and second ends of the body.

According to at least one embodiment of the eighth aspect, the body may include a tapered contact surface which tapers outwardly from the first end towards the second end.

According to at least one embodiment of the eighth aspect, the first and second parts may be held together with a removable fastening element.

According to at least one embodiment of the eighth aspect, each of the first and second parts may have a substantially half cylindrical shape, wherein the first part may have a first mating surface and the second part may have a second mating surface, wherein the first and second mating surfaces may abut one another when the first and second parts are attached, wherein the first mating surface of the first part may have a male fastening portion projecting therefrom, and the second mating surface of the second part may have a female fastening portion adapted to receive the male fastening portion.

According to at least one embodiment of the eighth aspect, the male fastening portion may comprise a first fastening aperture, and the second part may comprise a second fastening aperture which connects the female fastening portion with an external surface of the second part, and wherein when the male fastening portion may be received in the female fastening portion the first and second fastening apertures align and the fastening element can be removably secured within the first and second fastening apertures to fasten the first and second parts together.

According to at least one embodiment of the eighth aspect, the fastening element may be a pin.

According to at least one embodiment of the eighth aspect, the locking nut may comprise a locking element with an externally threaded portion located within the bore.

According to at least one embodiment of the eighth aspect, the bore may extend from an entrance thereof into the body, wherein the entrance may be provided at the first end of the body, wherein the locking element may be biased within the bore in a first direction by a biasing member towards the entrance of the bore.

According to at least one embodiment of the eighth aspect, the whole locking element may be located within the bore

According to at least one embodiment of the eighth aspect, the body may have a multi-sided profile for interaction with an external tool.

According to a ninth aspect not part of the present invention, there is provided an assembly comprising:
a subsea unit comprising an elongate passage;
a guide rod fixed to a subsea installation and secured within the elongate passage; and
the locking nut of any preceding claim engaging the guide rod such that the body of the nut bears against the subsea unit and the guide rod is secured within the passage.

According to at least one embodiment of the ninth aspect, the elongate passage may have an inlet and an outlet and the guide rod may extend through the elongate passage such that a protruding part of the guide rod extends beyond the outlet, wherein the locking nut engages the protruding part of the guide rod.

According to at least one embodiment of the ninth aspect, the subsea structure is a X-mas tree and the actuator assembly extends in a mainly horizontal direction from the X-mas tree wherein a free and distal end of the guide rod is further away from the X-mas tree than a distal end of the actuator housing with respect to the horizontal direction. This provides full access to the locking nut by an ROV.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any claimed embodiment may be technically combined with any other claimed embodiment or embodiments.

### Brief Description of the Drawings

The following drawings illustrate exemplary embodiments of the disclosure and serve to explain, by way of example, the principles of the disclosure:
Fig 1 shows an actuator assembly;
Figs. 2A and 2B show a sectional view of the actuator assembly of Fig.1;
Fig. 3 shows an actuator employed in the actuator assembly of Fig.1
Fig. 4 shows a receptacle employed in the actuator assembly of Fig. 1 attached to a part of a valve;
Figs. 5A and 5B show a locking nut, guide element and guide rod of the actuator assembly of Fig. 1;
Fig. 6 shows an anti-calcification arrangement of the assembly of Fig. 1
Fig. 7 shows the actuator assembly of Fig. 1 attached to a body of a well tree;
Figs. 8A and 8B show a first locking nut which may be employed in the actuator assembly of Fig. 1;
Figs. 9A and 9B show a second locking nut which may be employed in the actuator assembly of Fig. 1;
Figs. 10A and 10B show a third locking nut which may be employed in the actuator assembly of Fig.1; and
Figs. 10C and 10D show first and second parts of the locking nut of Figs. 10A and 10B.

### Detailed Description

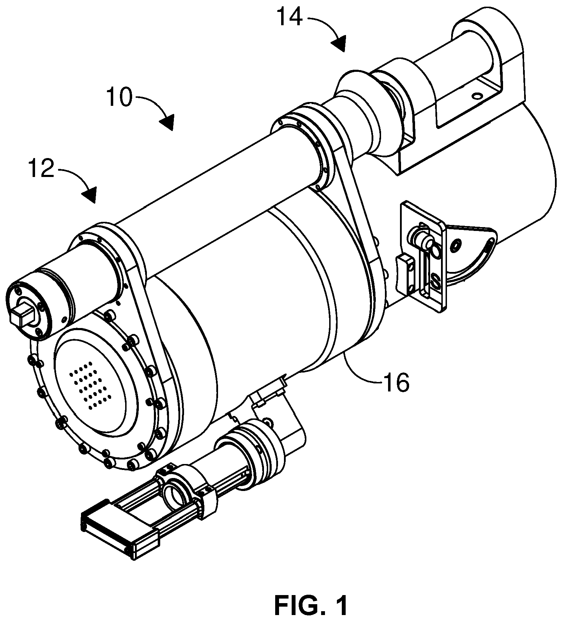

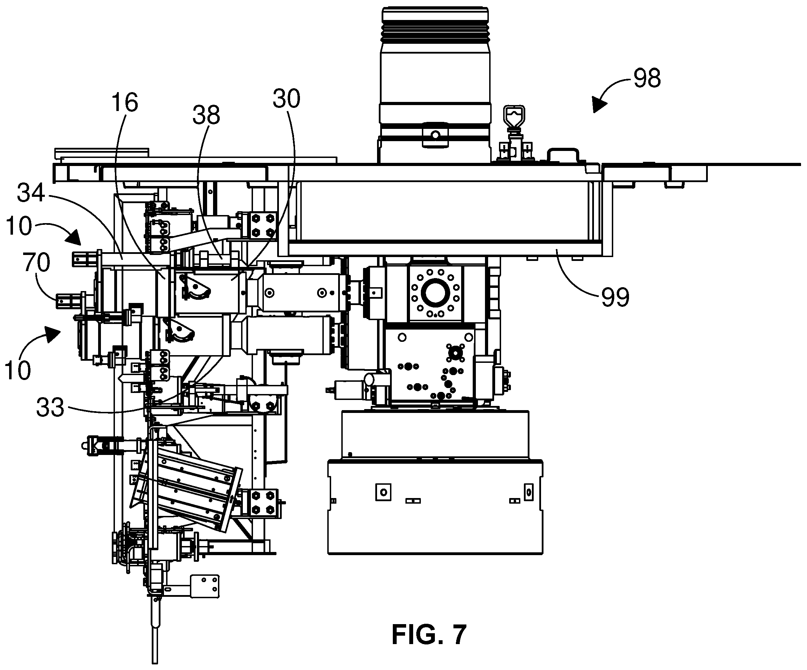

With reference to Fig. 1 there is shown an actuator assembly 10. The actuator assembly 10 is for actuating a valve element of a subsea valve. In Fig. 7 the actuator assembly 10 is shown forming part of a well tree 98 which houses such valve elements.

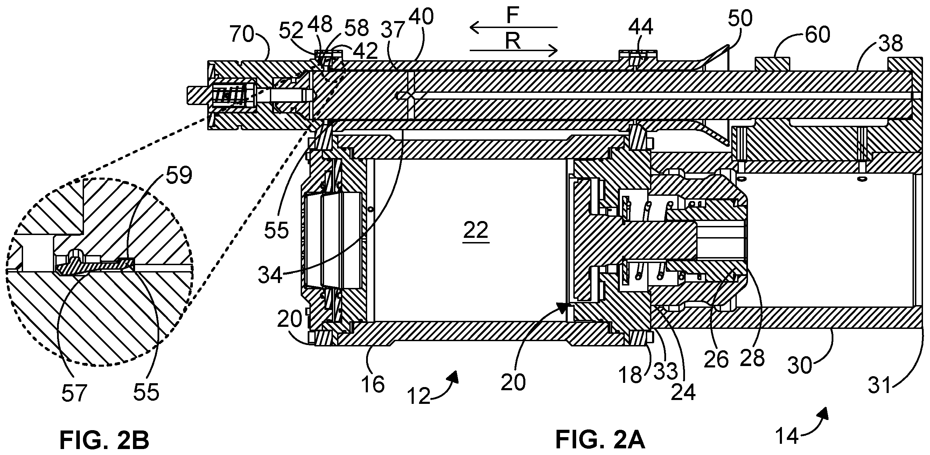

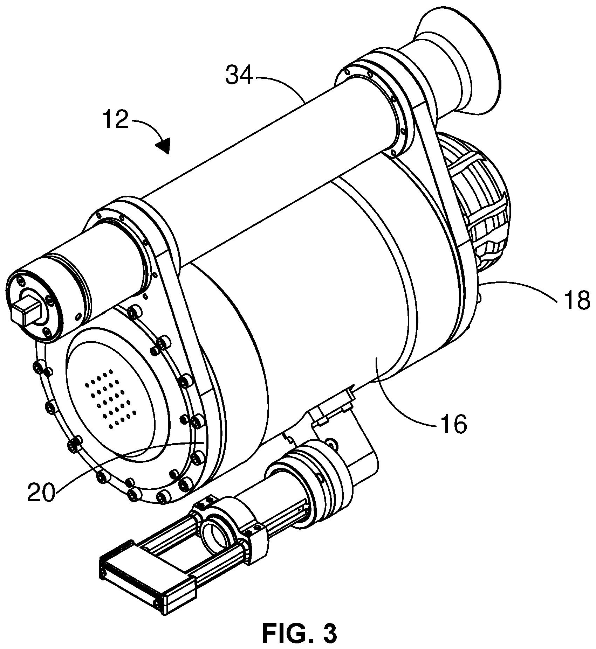

Returning to Fig. 1, the actuator assembly 10 is made up of an actuator 12 and a receptacle 14. The actuator 12 includes an actuator housing 16, which is shown in isolation in Fig. 3. The actuator housing 16 is preferably made of metal and most preferably made of steel. The actuator housing 16 may be substantially tubular and project between actuator housing proximal and actuator housing distal ends 18, 20. Referring to Figs 2A and 2B, the actuator housing 16 includes an actuator space 22 which houses an electric motor (not shown) and a drive mechanism 20 (best shown in Fig. 2A). As depicted, the actuator may comprise a head 24 which projects out of the actuator housing 16. Preferably, inside the head 24 is a rotatable element 26 which has a projection receiving slot 28 that rotates with the rotatable element 26. The electric motor provides a motive force to the drive mechanism 20 such that the rotatable element 26 is rotated.

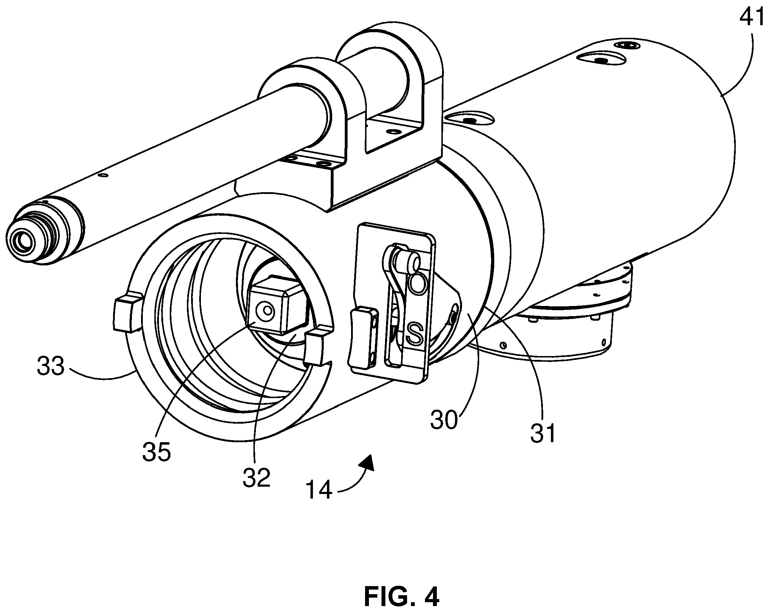

The receptacle 14, which is shown without the actuator in Fig. 4, includes a receptacle housing 30, which is preferably made of metal and most preferably made of steel. In Fig. 4, the receptacle 14 is shown attached to part of a subsea valve 41. The receptacle housing 30 may be substantially tubular and project between receptacle housing proximal and receptacle housing distal ends 31, 33. The purpose of the receptacle 14 is to connect the actuator 12 with the well tree and optionally to house the mechanical connection between the drive mechanism 20 of the actuator 12 and a drive element of the valve. Part of an example drive element 32 is best shown in Fig. 4. As shown the drive element may include a cuboidal projection 35 which is received inside the slot 28, and therefore the projection 35 may be rotated by rotatable element 26 when it is driven by the drive mechanism 20. This rotation may be translated into a linear motion which may be used to actuate the valve in the tree. The drive element 32 may be made up of one or more parts and have one or more motive stages. In use the receptacle housing distal end 33 abuts the actuator housing proximal end 18.

Referring back to Fig. 2A, located on the actuator housing 16 is a guide element 34. The guide element 34 defines a guide passage 37 for a guide rod 38 located on the receptacle housing 30. As depicted the guide element 34 may comprise a guide tube 40, and first and second brackets 42, 44 which mount the guide tube 40 on the actuator housing. The guide passage 37 may extend between proximal and distal openings 50, 52 of the guide element. As shown the first bracket 42 may comprise a bracket aperture 48 which forms the distal opening 52 of the guide element 34 and the passage may extend through the bracket aperture and guide tube 40. The bracket aperture 48 may taper inwardly towards the guide tube 40 from the distal opening 52 of the passage so that the bracket has an inwardly tapered contact surface 58. Referring to Fig. 2B, located within the guide passage may be a retaining element 55 which is adapted to engage the guide rod. In the depicted example, the retaining element is a snap ring 55 located in a first groove 57 in the guide element 34 and adapted to engage a second groove 59 on the guide rod 38.

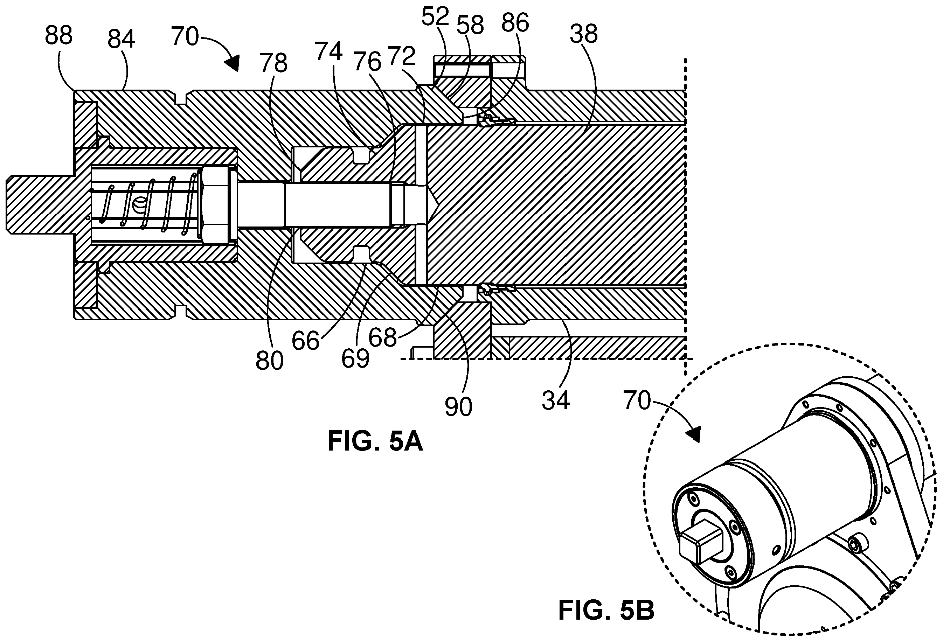

Referring to Fig. 2A, the guide rod 38 may be mounted upon the housing by way of a guide mounting bracket 60. The guide rod 38 extends in a forward direction (F) and parallel to the receptacle housing 30 into the guide passage 37. As best shown in Fig. 5A the guide rod 38 may comprise first and second diameter portions 66, 68, where the second diameter portion 68 is located more proximate the guide mounting bracket 60 than the first diameter portion 66 and the second diameter portion 68 is greater than the first diameter portion. An angled surface 69 connects the first and second diameter portions.

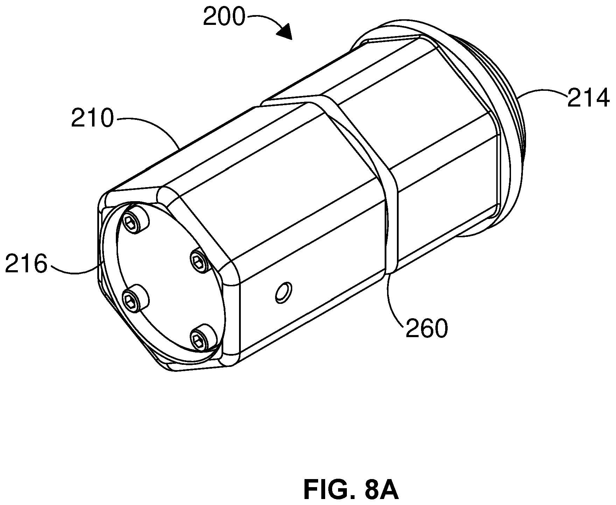

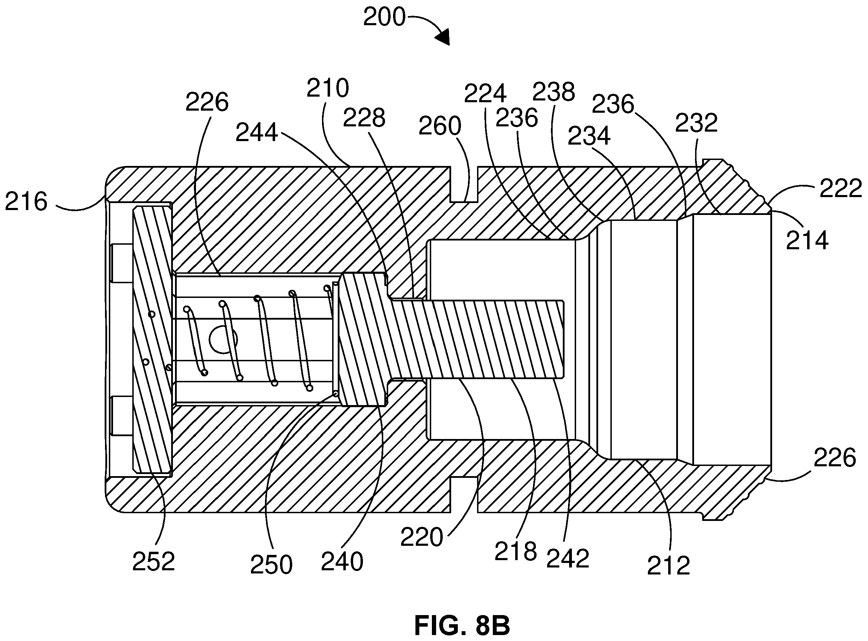

The guide rod 38 may be removably secured within the guide passage 37 by a locking nut 70. Three versions of a suitable locking nut will be described below in detail in relation to Figures 8, 9 and 10. As shown, for ease of access for an ROV the locking nut 70 is located at the "front" of the actuator assembly, that is the end of the actuator assembly which when installed is remote from the valve installation. More specifically, the locking nut 70 engages the guide rod 38 such that it is in contact with a guide contact surface of the guide which limits movement of the nut 70 in a rearward direction (R) (opposite to the forward direction (F)).

As best shown in Figs 5A and 5B, this guide contact surface is preferably the inwardly tapered contact surface 58 of the bracket. Preferably, the guide rod 38 extends through the guide passage 37 into a nut bore 72 of the nut. In particular, as shown, a protruding part 74 of the guide rod may extend beyond the distal opening 52 of the guide passage, and this protruding part of the guide rod is engaged by the nut 70. The guide rod 38 may have a threaded bore 76 which extends from a free end 78 of the guide rod in the rearward direction. The locking nut 70 may have a threaded element 80 which engages the threaded bore 76 when the locking nut engages the guide rod. As shown this threaded element 80 is preferably a locking bolt with an externally threaded portion located in the nut bore 72. The locking bolt is preferably biased within the nut bore 72 in the rearward direction. This allows shocks to be absorbed if the guide rod and locking bolt "bump" into each other during assembly of the actuator assembly. The locking nut 70 has a nut body 84 which extends in the forward direction between first and second ends 86, 88 thereof. In the example shown, the first end 86 is located more proximate the guide element 34 than the second end 88. As shown the nut body 84 may have an outwardly tapered contact surface 90 which tapers outwardly from the first end 86 of the body towards the second end 88 of the body. In the depicted example, the outwardly tapered contact surface 90 is in contact with the inwardly tapered contact surface 58 of the guide. Optionally, the outwardly tapered contact surface 90 is provided with an external thread (not shown), which is arranged to engage a corresponding internal thread provided in the inwardly tapered contact surface 58.

Referring to Fig. 2A, preferably, the guide rod 38 and mounting bracket 60 are made of metal and the guide rod mounting bracket 60 is secured to the receptacle housing with tensioned bolts which are also made of metal. Preferably, the locking nut 70 and bracket 42 are also made of metal. In this way a current of electrons may flow from the receptacle housing 30 to the actuator housing 16 via the guide rod 38.

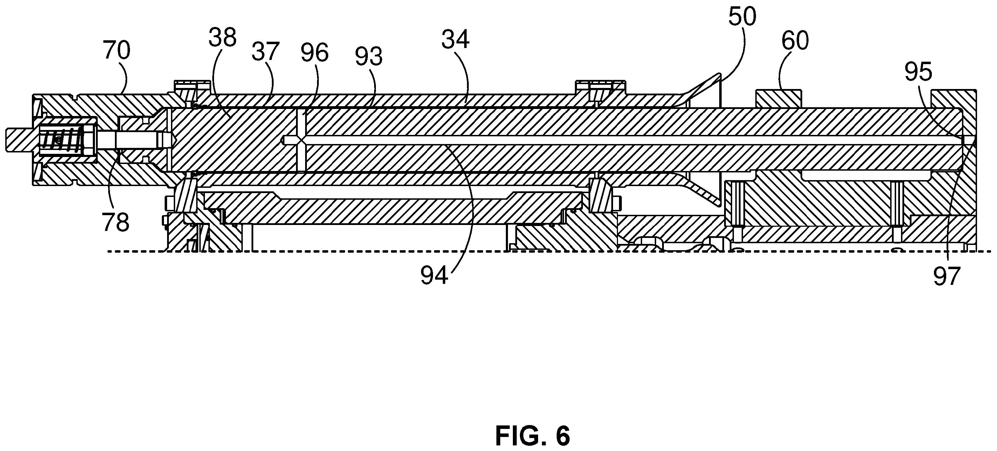

Preferably, as best shown in Fig. 6, the assembly includes an anti-calcification arrangement. In particular, the guide rod 38 may be secured within the passage 37 such that an annular space 93 surrounding the guide rod is formed, which is in communication with the proximal opening 50 of the guide passage. As depicted, the distal opening of the guide passage 37 is closed by the locking nut 70. As shown the guide rod may have an internal passage 94 extending therethrough between an internal passage inlet 95 and an internal passage outlet 96. The internal passage outlet 96 is in communication with the annular space 93 and spaced apart from the free end 78 of the guide rod. The internal passage inlet 95 is preferably located outside the guide passage and is connectable to a source of anti-calcification fluid (not shown), which may for example be citric acid. As depicted, the guide passage may extend in the forward direction from the internal passage inlet 95, which is in communication with an mounting bracket aperture 97 provided in the mounting bracket, to a radial portion of the internal passage 94 which extends to the internal passage outlet 96.

As depicted in Fig. 7, the assembly 10 forms part of a subsea valve in use. In the depicted example, the assembly forms part of a well tree 98 and the assembly projects from a body 99 of the well tree. In particular, the proximal end of the assembly (i.e. the receptacle housing proximal end 33) is connected to the body 99, and the assembly projects outwardly from the body 99. The position of the nut 70 at the remote end of the assembly facing away from the body 99 of the well tree 98 means that the assembly can be easily assembled/disassembled by the ROV. In practice, the subsea valve is located on a base surface (not shown), which may be the seafloor or a foundation. The guide rod may be located above the receptacle housing with respect to the base surface and the guide element may be located above the actuator housing with respect to the base surface.

With reference to Figs. 8A and 8B, there is shown a locking nut 200 which may be employed in the assembly of Fig. 1. The nut 200 is for locking a subsea unit relative to a guide rod fixed to a subsea installation, and may be used in the assembly of Fig.1. The locking nut 200 has a body 210 which defines a bore 212. The bore 212 extends between first and second ends 214, 216 of the body 212. Located within the bore 212 is a locking element 218 with a threaded portion 220. Preferably, the whole locking element 218 is located within the bore. As shown the threaded portion 220 of the locking element 218 may be an externally threaded portion located in the bore 212. The threaded portion 220 is preferably arranged to engage the threaded bore of the guide rod described with reference to Figs. 5A and 5B. Preferably, as shown the locking element 218 is a locking bolt, and the bolt is arranged within the bore 212 such that a screw axis of the locking bolt is co-axial with a bore axis of the bore. The bore axis of the bore 212 is the central axis of the bore.

As shown, the body 210 may be elongate, and in particular have a diameter D and a length L (measured between the first and second ends 214, 216), which is at least 2.5 times D. The diameter D may be the greatest outer diameter of the body 210 taken along the length L of the body 210.

The body 210 includes an outwardly tapered contact surface 222 which tapers outwardly from the first end 214 towards the second end 216. In the depicted example, the outwardly tapered contact surface 222 is provided with an external thread 226 which is arranged to engage with a corresponding internal thread of an inwardly tapered surface of the guide element. The body 210 is preferably formed of metal and most preferably formed of steel. The locking element 218 is also preferably formed of metal and most preferably formed of steel so that a current may flow between the body 210 and locking element 218.

As shown the bore 212 may include a first bore portion 224 and a second bore portion 226 and a connecting passage 228 which connects the first and second bore portions 224, 226. As shown, the first bore portion 224 extends from a first bore end located at the first end 214 of the body to the connecting passage 228, which extends from the first bore portion 224 to the second bore portion 226. The second bore portion 226 extends from the connecting passage to a second bore end located at the second end 216 of the body. The first bore portion 224 reduces in diameter as it extends from the first bore end to the connecting passage 228. As depicted, the bore 212 may have first and second diameter portions 232, 234 where the first diameter portion 232 is located more proximate the first bore end than the second diameter portion 234 and the first diameter portion 232 is greater than the second diameter portion 234. As shown a first angled surface 236 connects the first and second diameter portions 232, 234. In the depicted example, the first bore portion 224 also includes a third diameter portion 236 which is located further away from the first bore end than the second diameter portion 234 and is less than the second diameter portion. A second angled surface 238 connects the second and third diameter portions 234, 236.

The locking element 218 may comprise a head 240 and a shank 242. The head 240 of the locking element 218 may be located in the second bore portion 226 and the shank 242 may project from the head into the first portion 224 and comprise the externally threaded portion of the locking element 218. The head 240 of the locking element 218 may be pressed against a surface 244 of the body which limits axial movement of the head 240 in the axial direction by a biasing element 250 located in the second bore portion 226. In the depicted example, a coiled spring is employed as the biasing element 250. The biasing element 250 may be arranged to press against the head 240 of the locking element 218 in a first direction towards the first end of the body 210. A plate 252 may retain the coiled spring 250 in the second bore portion and the spring 250 may be positioned between the head 240 of the locking element 218 and the plate. As shown, the shank 242 of the locking element 218 is non-rotatably engaged with the connecting passage 228 such that the locking element 218 is non-rotatable with respect to the body. In this way, the body 210 and locking element 218 rotate as one when the externally threaded portion engages the threaded bore of the guide.

As shown the body 210 may have a multi-sided profile so that it can be received by a socket tool of the ROV adapted to receive the nut. The outer surface of the nut may be provided with a locking recess 260 which is for receiving a corresponding protrusion of the socket tool. In use the corresponding protrusion is fitted into the recess 260 such that it forms a snapfit connection with the recess so that the socket tool is connected to the body 210.

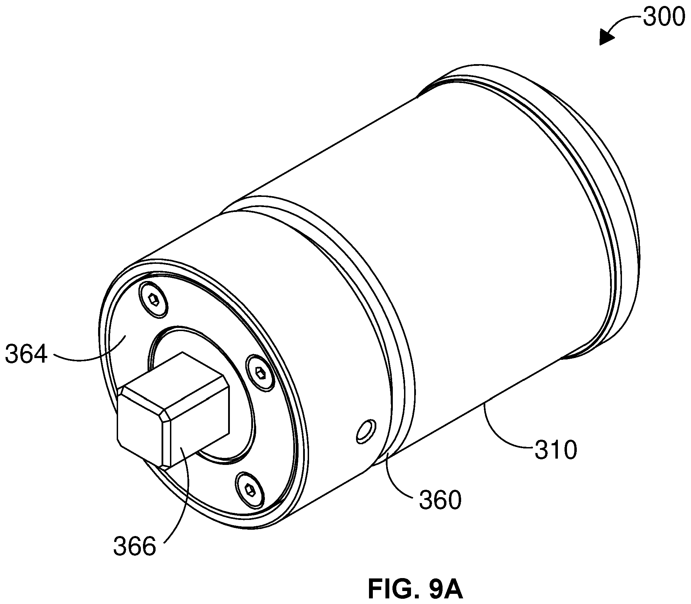

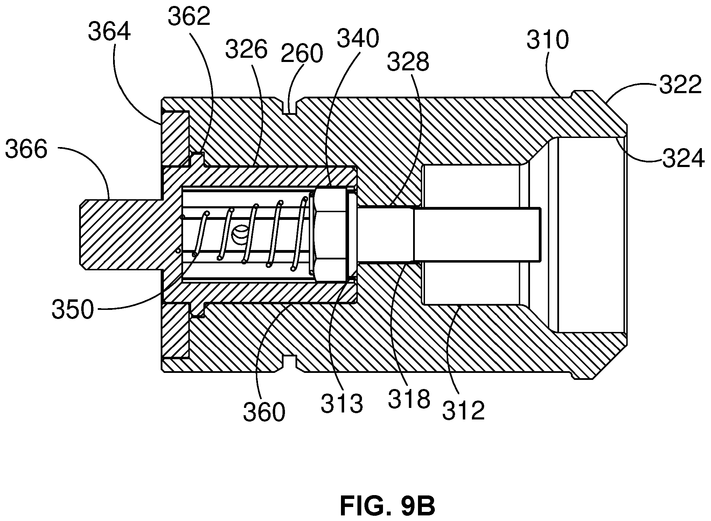

With reference to Figs. 9A and 9B, there is shown another version of a locking nut 300 which may be employed in the assembly of Fig. 1. The nut 300 of Figs. 8A and 8B is for locking a subsea unit relative to a guide rod fixed to a subsea installation, and may be used in the assembly of Fig. 1.

The locking nut 300 includes a body 310 with a bore 312 and a locking element 318 as described in connection with the locking nut of Figs. 8A and 8B. As shown the locking nut has a tapered outer contact surface 322 as described in connection with Figs. 8A and 8B, although the depicted example does not have an external thread like in the example shown in Figs. 8A and 8B. As depicted, the locking nut 300 may also have a locking recess 260 as described in connection with Figs. 8A and 8B.

Also like in the Figs. 8A and 8B version of the nut, the nut 300 includes first and second bore portions 324, 326 connected by a connecting passage 328 and the head 340 of the locking element 318 is pressed against a limiting surface 313 of the body 310 which defines the second bore portion 326 by a biasing element 350 such that axial movement of the head towards the first bore end of the first bore portion 324 is limited. However, unlike in the locking nut of Figs. 8A and 8B, the locking element 318 may be rotated independently of the body 310.

As shown the way in which the head 340 of the locking element 318 is arranged within the second bore portion 326 is also different with respect to the Figs. 8A and 8B version of the locking nut. In particular, the head of the locking element 318 may be supported in the bore by a rotatable socket element 360 which has an inner surface adapted to non-rotatably engage the head 340 of the locking element 318, and has an outer cylindrical surface which may rotate within the second bore portion 326. The socket element 360 has an annular flange 362 and the socket element 360 is kept in the bore 312 by a locking ring 364 which abuts the flange and retains the socket element within the bore. The socket element 360 also houses the biasing element 350 which as described above presses the head 340 of the locking element 318 against the limiting surface 313. A cuboidal projection 366 projects from the socket element and the projection may be rotated by a tool to rotate the socket element 360 within the body 310.

Another point of difference with respect to the locking nut 200 of Figs. 8A and 8B is that the profile of the body 310 of the nut 300 is substantially circular, rather than hexagonal, like in the locking nut 200 of Figs. 8A and 8B.

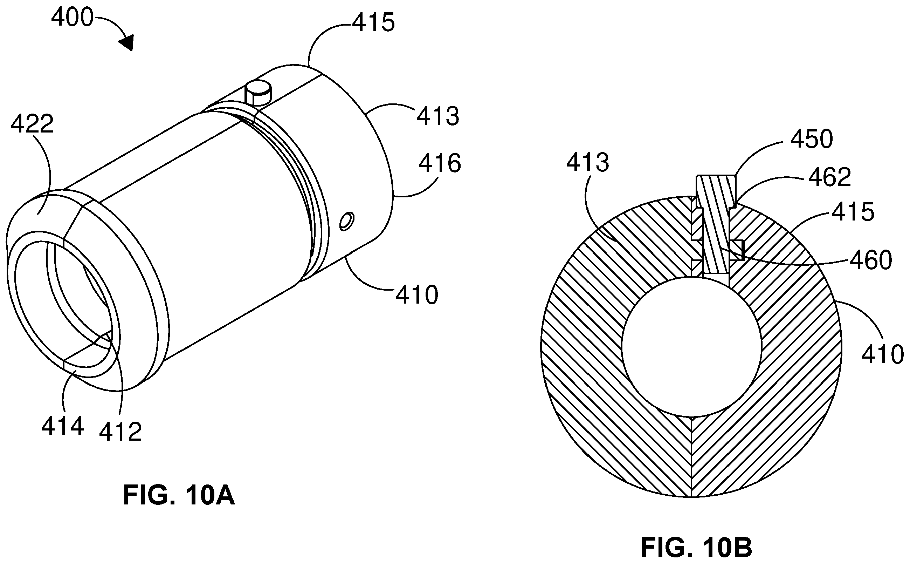

With reference to Figs. 10A-10D, there is shown a locking nut 400 which may be employed in the assembly of Fig 1. Like the locking nuts 200, 300 of Figs. 8A and 8B and Figs. 9A and 9B, the nut 400 of Figs. 10A-10D is for locking a subsea unit relative to a guide rod fixed to a subsea installation, and may be used in the assembly of Fig. 1 to secure the guide rod within the passage of the actuator. Also like the locking nuts 200, 300, the nut 400 of Figs. 10A-10D has a body 410 with a bore 412. The locking nut 400 may also have an outwardly tapering contact surface 422, a locking element with an externally threaded portion, and one or more of the other features of the locking nuts of Figs. 8A and 8B and Figs. 9A and 9B.

The locking nut 400 has a body 412 formed of first and second parts 413, 415. The first and second parts 413, 415 of the body 412 are detachable from one another such that in use the nut 400 may be split to release the guide rod when it is secured in the passage of the subsea unit. As shown, preferably, the body 410 is arranged to split longitudinally when the first and second parts 413, 415 are detached from each other. The body 410 extends between first and second ends 414, 416 thereof. The first and second parts 413, 415 are preferably formed such that they extend between the first and second ends 414, 416 of the body. As shown, together the first and second parts 413, 415 may form the bore 412, which is arranged to receive the guide rod in use. The first and second parts 413, 415 are preferably held together with a removable fastening element 450, which in the depicted example is a pin.

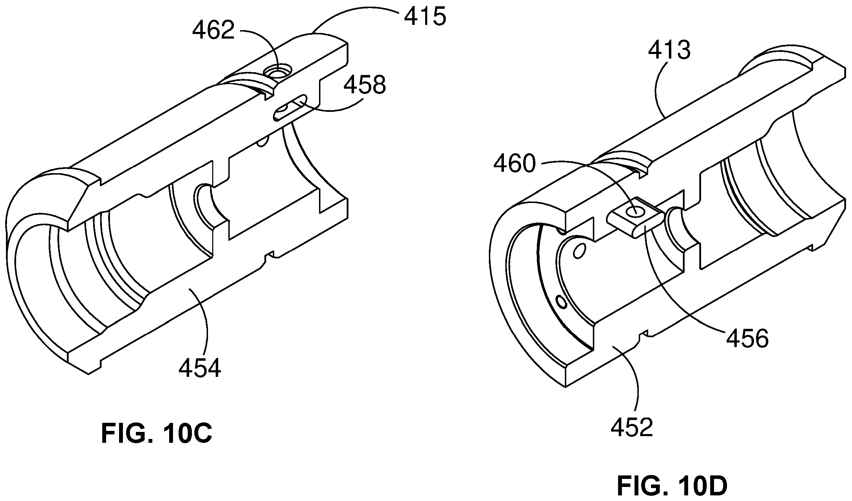

As best shown in Figs. 10C and 10D, each of the first and second parts 413, 415 may have a substantially half cylindrical shape with first and second mating surfaces 452, 454, respectively. The first and second mating surfaces 452, 454 abut each other when the first and second parts 413, 415 are attached. As shown, the first mating surface 452 has a male fastening portion 456 projecting therefrom, and the second mating surface 454 of the second part 415 has a female fastening portion 458 adapted to receive the male fastening portion 456. In particular as shown, the male fastening portion 456 may comprise a first fastening aperture 460, and the second part 415 may comprise a second fastening aperture 462 which connects the female fastening portion 458 with an external surface of the second part 415. As shown in Fig 10B, when the male fastening portion 456 is received in the female fastening portion 458 the first and second fastening apertures 460, 462 align and the fastening element 450 is removably secured within the first and second fastening apertures 460, 462 to fasten the first and second parts together 413, 415. The removable fastening element 450 may be secured within the first and second fastening apertures 460, 462 by a threaded or press fit arrangement.

With reference to Fig. 2A, in use, the receptacle 14 is fixed to a subsea valve. When the actuator needs to be replaced/serviced, an ROV first of all disengages the locking nut 70 from the guide rod 38. This is done by unscrewing the locking nut 70 from the guide rod 38. The actuator 12 can then be removed from the receptacle 14 by pulling the actuator 12 forwards. The actuator 12 is then serviced/replaced, and the new or old actuator is put into position by fitting the guide rod 38 into the guide passage 37 of the guide element and arranging the actuator such that the actuator housing proximal end 18 abuts the receptacle housing distal end 33. The locking nut 70 is then aligned with the guide element and is screwed onto the guide rod 38 such that the outwardly tapered contact surface 90 of the nut body abuts the inwardly tapered contact surface 58 of the guide element as shown in Fig. 5A. The guide rod 38 is thus secured within the guide passage 37 by the locking nut and the actuator 12 securely attached to the receptacle 14.

With reference to Fig. 6, when the arrangement is to be "de-calcified", an anti-calcification fluid such as citric acid)is pumped into the internal passage 94 via the internal passage inlet 95. This fluid then fills the annular space 93 and reacts with any calcium deposits such that solid calcium deposits are no longer present within the annular space 93. The fluid exits the annular space 93 via the proximal opening 50 of the guide passage 37.

In use, the locking nuts of Figs 8, 9 and 10 may engage the guide rod by screwing the locking element 218, 318 with an externally threaded portion of each of these nuts into the threaded bore of the guide rod such that the outwardly tapered surface 222, 322, 422 of the body 210, 310, 410 contacts the inwardly tapered surface of the guide. This is done using an appropriate ROV tool.

In use of the Fig. 8 version of the nut 200, the body 210 of the nut is rotated when the externally threaded portion engages the threaded bore. This is done using an ROV socket tool which is snap-fitted into the locking recess provided on the outer surface of the body.

In use of the Fig. 9 version of the nut 300, the ROV engages the cuboidal projection 366 and turns the cuboidal projection 366 to rotate the locking element 318 and to screw the externally threaded portion into the guide rod.

In use of the locking nut of Fig. 10, when the locking nut 400 is securing the guide rod within the guide passage, if it is desired to remove the guide rod from the guide passage, and it is not possible to disengage the locking nut from the guide rod using a "screwing" motion, the removable fastening element 450 may be removed from the body 410 of the locking nut 400 to detach the first and second parts 413, 415 and to split the body longitudinally. This means that the body 410 no longer bears against the guide meaning that the guide rod is free to be removed from the guide passage.

The guide rod and guide arrangement described herein ensures that the actuator can be removed in a safe and controlled way by an ROV in contrast to prior arrangements which employ clamps. This reduces the risk of a failed ROV operation to service/replace the actuator, and the risk of equipment loss.

The specific electrical connection between the receptacle housing and the actuator housing via the guide rod means that electrons from sacrificial metal plates provided on the valve can flow to the actuator housing. This reduces the rate at which the actuator rusts/degrades, and the frequency of servicing/replacement operations.

The internal passage of the guide rod allows an anti-calcification fluid such as citric acid to be pumped into the guide passage ensuring that the guide rod does not become undesirably fixed within the guide passage as a result of calcium deposits.

The tapered contact surfaces on the guide element and locking nut ensure that it is easy to align the nut, guide and rod when the actuator has been assembled, thereby ensuring that the assembly operation has a low risk of failure. The tapered contact surfaces also ensure that there is a strong electrical connection between the locking nut and bracket and guide rod.

In the actuator assembly described herein the locking nut is positioned at the front, or remoted end, of the assembly. This ensures that the locking nut may be easily accessed by an ROV to dissemble or assemble the actuator assembly.

Each of the locking nuts of Figs. 8 to 10 is advantageous as it allows the specific assembly shown in Fig. 1 to be fixed in position. In addition, the locking nut allows a strong electrical connection between the tapered contact surfaces on the guide element and guide rod to be formed. The locking element itself may also form part of the flow path for electrons from the guide rod to the actuator housing. The specific locking element with an externally threaded portion is also beneficial because, due to the fact that in practice the locking element has a much smaller diameter than the body, a significant torque can be applied to the locking element, which means it is very easy to "screw" the locking element into the threaded bore of the guide rod.

The specific locking nut of Fig. 9 is advantageous because the body of the nut can remain stationary while the externally threaded portion of the nut is screwed into the threaded bore of the guide rod.

The fact that the specific locking nut is long (i.e. has a length at least 2.5 times its outer diameter) means that the locking nut can be easily secured by the ROV. Also, the locking recess on the outer surface of the nut allows the ROV to easily attach itself to the nut.

The multi-diameter bore of the locking nut also ensures that the locking nut can be easily aligned with the guide rod.

The fact that the locking element within the body of the nut is biased away from the rod receiving end of the bore ensures that the threaded portions of the locking element and guide rod are not damaged if they bump into each other during the assembly operation.

The locking nut of Fig. 10 is advantageous because the first and second parts can be detached from one another in use such that the guide rod is no longer secured within the guide passage by the locking nut. The specific locking nut of Fig. 10 therefore provides an "emergency release" for the system.

The specific position of the guide rod and guide element above their respective housings with respect to the surface upon which the subsea valve is provided upon ensures that the ROV does not need to fight gravity when the ROV is fitting the guide rod into the guide passage.

This written description uses examples to disclose the invention, including the best mode, and also to enable any person skilled in the art to practice the invention. The patentable scope of the invention is defined by the claims, and may include other examples that occur to those skilled in the art. Such other examples are intended to be within the scope of the claims if they have structural elements that do not differ from the literal language of the claims.

## Claims

1. An actuator (12) for a cathodically protected subsea valve (41) having a guide rod (38) extending therefrom, the actuator (12) comprising:
an actuator housing (16);
an electric motor located within the actuator housing (16);
a drive mechanism (20) adapted to be driven by the electric motor and
engagable with the subsea valve (41); and
a guide element (34) on the actuator housing (16), the guide element (34) comprising an elongate guide passage (37) for receiving the guide rod (38), wherein the guide element (34) comprises at least one bracket (42) mounted on the housing and a tube (40) supported by the bracket (42);
**characterised in that** the bracket and actuator housing (16) are made of metal and the bracket (42) is mounted on the housing (16) such that electrons may flow from the bracket (42) to the actuator housing (16).

2. The actuator (12) of claim 1, wherein the guide passage (37) comprises proximal and distal openings (50, 52), and the distal opening (52) is provided with an inwardly tapered contact surface (58).

3. The actuator (12) of claim 1 or 2, wherein the actuator (12) comprises a single guide element (34).

4. The actuator (12) of any preceding claim, wherein the elongate guide passage (37) contains a retaining element (55) engageable with a portion of the guide rod (38).

5. A receptacle (14) for connecting an actuator (12) to a cathodically protected subsea valve (41), the receptacle (14) comprising:
a receptacle housing (30) having proximal and distal ends (31, 33) and an internal chamber, wherein the proximal end (31) is connectable to a body of the valve (41) such that a drive element (32) of the valve (41) is at least partly located in the internal chamber; and the distal end (31) is adapted to receive at least part of a drive mechanism (20) of the actuator (12) such that the drive mechanism (20) and drive element (32) engage within the internal chamber; and
a guide rod (38) on the receptacle housing (30), the guide rod (38) extending parallel to the receptacle housing (30);
**characterised in that** the receptacle housing (30) and guide rod (38) are made of metal, and the guide rod (38) is mounted on the receptacle housing (30) such that a current of electrons may flow from the receptacle housing (30) to the guide rod (38).

6. The receptacle (14) of claim 5, wherein the guide rod (38) is provided with a threaded portion (76) for engaging a corresponding threaded portion (80) of a locking nut.

7. The receptacle (14) of claim 6, wherein the guide rod (38) has a free end (78) remote from the receptacle housing (30), wherein the threaded portion (76) is a threaded bore (76) which extends longitudinally in the direction of the receptacle housing (30) from the free end (78).

8. The receptacle (14) of any of claims 5 to 7, wherein the receptacle (14) comprises a single guide rod (38).

9. The receptacle (14) of any of claims 5 to 8, wherein the guide rod (38) has an internal passage (94) having an inlet connectable (95) to a source of anti-calcification fluid and at least one outlet (96) on the outer surface of the rod.

10. The receptacle (14) of claim 9, wherein the at least one outlet (96) is longitudinally spaced apart from the free end (78) of the rod (38).

11. An actuator assembly (10) for a cathodically protected subsea valve (41), comprising
an actuator (12) comprising:
an actuator housing (16);
an electric motor located within the actuator housing (16); and
a drive mechanism (20) adapted to be driven by the electric motor and engagable with the subsea valve (41); and
a receptacle (14) comprising:
a receptacle housing (30) having proximal and distal ends (31, 33) and an internal chamber, wherein the proximal end (31) is connectable to a body of the valve (41) such that a drive element (32) of the valve (41) is at least partly located in the internal chamber; and the distal end (33) is adapted to receive at least part of the drive mechanism (20) of the actuator (12) such that the drive mechanism (20) and drive element (32) engage within the internal chamber; and
a guide element (38) on the actuator housing (16), the guide element (38) comprising an elongate guide passage (37); and a guide rod (38) on the receptacle housing (30), the guide rod (38) extending parallel to the receptacle housing (30) and being removably secured within the guide passage (37) of the actuator (12);
**characterised in that** each of the actuator housing (16), receptacle housing (30), guide element (34) and guide rod (38) is made of metal, wherein the guide element (34) and guide rod (38) are mounted upon their respective housings (16, 30) and the guide rod (38) secured within the passage (37) such that a current of electrons may flow from the receptacle housing (30) to the actuator housing (16) via the guide rod (38).

12. The assembly (10) of claim 11, wherein the guide rod (38) has an internal passage (94) having an inlet (95) connectable to a source of anti-calcification fluid and at least one outlet (96) on the outer surface of the rod (38), and wherein the guide rod (38) is secured within the guide passage (37) such that an annular space (93) is formed between the guide rod (38) and the guide passage (37), wherein the annular space (93) is in communication with the at least one outlet (96).

13. The assembly (10) of any of claims 11 to 12, wherein the assembly comprises a locking nut (70) with a threaded portion (80), wherein the guide rod (38) further comprises a corresponding threaded portion (76), wherein the threaded portion (80) of the locking nut (70) engages the corresponding threaded portion (76) of the guide rod to removably secure the guide rod (38) within the passage (37).

14. The assembly (10) of claim 13, wherein the passage (37) has an inlet (50) and an outlet (52), wherein the guide rod (38) extends through the passage (37) such that a protruding portion (74) of the guide rod (38) extends beyond the outlet (52) of the passage (37) and the locking nut (70) engages the protruding part (74) of the guide rod (38) such that the locking nut (70) bears against the guide element (34) to removably secure the guide rod (38) within the passage (37).

15. The assembly (10) of claim 13 or 14, wherein the guide passage (37) comprises proximal and distal openings (50, 52) and the distal opening (52) is provided with an inwardly tapered contact surface (58), wherein the locking nut (70) comprises first and second ends (86, 88) and an outwardly tapered contact surface (90) which tapers outwardly from the first end (86) of the locking nut (70) towards the second end (88) of the locking nut (70), wherein the outwardly tapered contact surface (58) is in contact with the inwardly tapered contact surface (58).

16. The assembly (10) of claim 13 to 15, wherein the guide rod (38) has a free end (78) remote from the receptacle housing (30), wherein the free end (78) has a threaded bore (76) which extends longitudinally in the direction of the receptacle housing (30), wherein the threaded bore (76) is the corresponding threaded portion (76) of the guide rod (38), wherein the locking nut (70) has a threaded element (80), wherein the threaded element (80) is the threaded portion (80) of the locking nut (70) and the threaded element (80) is adapted to enter and engage with the threaded bore (76) such that the locking nut (70) removably secures the actuator (12) to the guide rod (38) and receptacle (14).

17. The assembly (10) of claim 16, wherein the threaded element (80) is biased in a first direction.

18. The assembly (10) of any of claims 16 to 20, wherein the guide rod (38) extends into the passage (37) in a forward direction (F), and the nut (70) engages the guide rod (38) such that the nut (70) presses against a guide contact surface (58) of the guide element (34) which prevents movement of the nut (70) in a rearward direction (R).

19. The assembly (10) of claim 18, wherein the locking nut (70) has a nut bore (72) and the guide rod (38) extends into the nut bore (72).

20. The assembly (10) of any of claims 11 to 19, wherein the actuator (12) is an actuator (12) in accordance with any of claims 1 to 4.

21. The assembly (10) of any of claims 11 to 20, wherein the receptacle (14) is a receptacle (14) in accordance with any of claims 5 to 10.

22. A subsea valve (41) comprising an actuator assembly in accordance with any of claims 11 to 21.

23. The subsea valve (41) of claim 22, wherein the valve is located on a base surface, wherein the guide rod (38) is located above the receptacle housing (30) with respect to the base surface and the guide element (34) is located above the actuator housing (14) with respect to the base surface.

24. A subsea valve assembly comprising at least one subsea valve (41) in accordance with claim 22 or 23.

## Patentansprüche

1. Ein Aktor (12) für ein kathodisch geschütztes Unterwasserventil (41) mit einer sich davon erstreckenden Führungsstange (38), wobei der Aktor (12) Folgendes beinhaltet:
ein Aktorgehäuse (16);
einen Elektromotor, der sich innerhalb des Aktorgehäuses (16) befindet;
einen Antriebsmechanismus (20), der angepasst ist, um von dem Elektromotor angetrieben zu werden und mit dem Unterwasserventil (41) in Eingriff gebracht zu werden; und
ein Führungselement (34) an dem Aktorgehäuse (16), wobei das Führungselement (34) einen länglichen Führungsdurchgang (37) zum Aufnehmen der Führungsstange (38) beinhaltet, wobei das Führungselement (34) mindestens eine Halterung (42), die an dem Gehäuse montiert ist, und ein Rohr (40), das von der Halterung (42) gestützt wird, beinhaltet;
**dadurch gekennzeichnet, dass** die Halterung und das Aktorgehäuse (16) aus Metall gefertigt sind und die Halterung (42) derart an dem Gehäuse (16) montiert ist, dass Elektronen von der Halterung (42) zu dem Aktorgehäuse (16) fließen können.

2. Aktor (12) gemäß Anspruch 1, wobei der Führungsdurchgang (37) eine proximale und eine distale Öffnung (50, 52) beinhaltet und die distale Öffnung (52) mit einer sich nach innen verjüngenden Kontaktfläche (58) bereitgestellt ist.

3. Aktor (12) gemäß Anspruch 1 oder 2, wobei der Aktor (12) ein einzelnes Führungselement (34) beinhaltet.

4. Aktor (12) gemäß einem der vorhergehenden Ansprüche, wobei der längliche Führungsdurchgang (37) ein Halteelement (55) enthält, das mit einem Abschnitt der Führungsstange (38) in Eingriff gebracht werden kann.

5. Eine Aufnahme (14) zum Verbinden eines Aktors (12) mit einem kathodisch geschützten Unterwasserventil (41), wobei die Aufnahme (14) Folgendes beinhaltet: ein Aufnahmegehäuse (30) mit einem proximalen und einem distalen Ende (31, 33) und einer Innenkammer, wobei das proximale Ende (31) derart mit einem Körper des Ventils (41) verbindbar ist, dass sich ein Antriebselement (32) des Ventils (41) mindestens teilweise in der Innenkammer befindet; und das distale Ende (31) angepasst ist, um mindestens einen Teil eines Antriebsmechanismus (20) des Aktors (12) derart aufzunehmen, dass der Antriebsmechanismus (20) und das Antriebselement (32) innerhalb der Innenkammer in Eingriff gebracht werden; und eine Führungsstange (38) an dem Aufnahmegehäuse (30), wobei sich die Führungsstange (38) parallel zu dem Aufnahmegehäuse (30) erstreckt; **dadurch gekennzeichnet, dass** das Aufnahmegehäuse (30) und die Führungsstange (38) aus Metall gefertigt sind und die Führungsstange (38) derart an dem Aufnahmegehäuse (30) montiert ist, dass ein Strom von Elektronen von dem Aufnahmegehäuse (30) zu der Führungsstange (38) fließen kann.

6. Aufnahme (14) gemäß Anspruch 5, wobei die Führungsstange (38) mit einem Gewindeabschnitt (76) zum Eingreifen in einen entsprechenden Gewindeabschnitt (80) einer Sicherungsmutter bereitgestellt ist.

7. Aufnahme (14) gemäß Anspruch 6, wobei die Führungsstange (38) ein freies Ende (78) entfernt von dem Aufnahmegehäuse (30) aufweist, wobei der Gewindeabschnitt (76) eine Gewindebohrung (76) ist, die sich in Längsrichtung in der Richtung des Aufnahmegehäuses (30) von dem freien Ende (78) erstreckt.

8. Aufnahme (14) gemäß einem der Ansprüche 5 bis 7, wobei die Aufnahme (14) eine einzelne Führungsstange (38) beinhaltet.

9. Aufnahme (14) gemäß einem der Ansprüche 5 bis 8, wobei die Führungsstange (38) einen inneren Durchgang (94) mit einem Einlass (95), der mit einer Quelle von Antiverkalkungsfluid verbunden werden kann, und mindestens einen Auslass (96) an der Außenfläche der Stange aufweist.

10. Aufnahme (14) gemäß Anspruch 9, wobei der mindestens eine Auslass (96) in Längsrichtung von dem freien Ende (78) der Stange (38) beabstandet ist.

11. Eine Aktoranordnung (10) für ein kathodisch geschütztes Unterwasserventil (41), die Folgendes beinhaltet:
einen Aktor (12), der Folgendes beinhaltet:
ein Aktorgehäuse (16);
einen Elektromotor, der sich innerhalb des Aktorgehäuses (16) befindet; und
einen Antriebsmechanismus (20), der angepasst ist, um von dem Elektromotor angetrieben zu werden und mit dem Unterwasserventil (41) in Eingriff gebracht zu werden; und
eine Aufnahme (14), die Folgendes beinhaltet:
ein Aufnahmegehäuse (30) mit einem proximalen und einem distalen Ende (31, 33) und einer Innenkammer, wobei das proximale Ende (31) derart mit einem Körper des Ventils (41) verbindbar ist, dass sich ein Antriebselement (32) des Ventils (41) mindestens teilweise in der Innenkammer befindet; und das distale Ende (33) angepasst ist, um mindestens einen Teil des Antriebsmechanismus (20) des Aktors (12) derart aufzunehmen, dass der Antriebsmechanismus (20) und das Antriebselement (32) innerhalb der Innenkammer in Eingriff gebracht werden; und
ein Führungselement (38) an dem Aktorgehäuse (16), wobei das Führungselement (38) einen länglichen Führungsdurchgang (37) beinhaltet; und eine Führungsstange (38) an dem Aufnahmegehäuse (30), wobei sich die Führungsstange (38) parallel zu dem Aufnahmegehäuse (30) erstreckt und entfernbar innerhalb des Führungsdurchgangs (37) des Aktors (12) befestigt ist;
**dadurch gekennzeichnet, dass** jedes von dem Aktorgehäuse (16), dem Aufnahmegehäuse (30), dem Führungselement (34) und der Führungsstange (38) aus Metall gefertigt ist, wobei das Führungselement (34) und die Führungsstange (38) auf ihren jeweiligen Gehäusen (16, 30) montiert sind und die Führungsstange (38) derart innerhalb des Durchgangs (37) befestigt ist, dass ein Strom von Elektronen von dem Aufnahmegehäuse (30) zu dem Aktorgehäuse (16) über die Führungsstange (38) fließen kann.

12. Anordnung (10) gemäß Anspruch 11, wobei die Führungsstange (38) einen inneren Durchgang (94) mit einem Einlass (95), der mit einer Quelle von Antiverkalkungsfluid verbunden werden kann, und mindestens einen Auslass (96) an der Außenfläche der Stange (38) aufweist und wobei die Führungsstange (38) derart innerhalb des Führungsdurchgangs (37) befestigt ist, dass ein ringförmiger Raum (93) zwischen der Führungsstange (38) und dem Führungsdurchgang (37) gebildet wird, wobei der ringförmige Raum (93) mit dem mindestens einen Auslass (96) in Verbindung steht.

13. Anordnung (10) gemäß einem der Ansprüche 11 bis 12, wobei die Anordnung eine Sicherungsmutter (70) mit einem Gewindeabschnitt (80) beinhaltet, wobei die Führungsstange (38) ferner einen entsprechenden Gewindeabschnitt (76) beinhaltet, wobei der Gewindeabschnitt (80) der Sicherungsmutter (70) in den entsprechenden Gewindeabschnitt (76) der Führungsstange eingreift, um die Führungsstange (38) entfernbar innerhalb des Durchgangs (37) zu befestigen.

14. Anordnung (10) gemäß Anspruch 13, wobei der Durchgang (37) einen Einlass (50) und einen Auslass (52) aufweist, wobei sich die Führungsstange (38) derart durch den Durchgang (37) erstreckt, dass sich ein vorstehender Abschnitt (74) der Führungsstange (38) über den Auslass (52) des Durchgangs (37) hinaus erstreckt und die Sicherungsmutter (70) derart in den vorstehenden Teil (74) der Führungsstange (38) eingreift, dass die Sicherungsmutter (70) gegen das Führungselement (34) presst, um die Führungsstange (38) entfernbar innerhalb des Durchgangs (37) zu befestigen.

15. Anordnung (10) gemäß Anspruch 13 oder 14, wobei der Führungsdurchgang (37) eine proximale und eine distale Öffnung (50, 52) beinhaltet und die distale Öffnung (52) mit einer sich nach innen verjüngenden Kontaktfläche (58) bereitgestellt ist, wobei die Sicherungsmutter (70) ein erstes und ein zweites Ende (86, 88) und eine sich nach außen verjüngende Kontaktfläche (90) beinhaltet, die sich von dem ersten Ende (86) der Sicherungsmutter (70) in Richtung des zweiten Endes (88) der Sicherungsmutter (70) nach außen verjüngt, wobei die sich nach außen verjüngende Kontaktfläche (58) mit der sich nach innen verjüngenden Kontaktfläche (58) in Kontakt steht.

16. Anordnung (10) gemäß Anspruch 13 bis 15, wobei die Führungsstange (38) ein freies Ende (78) entfernt von dem Aufnahmegehäuse (30) aufweist, wobei das freie Ende (78) eine Gewindebohrung (76) aufweist, die sich in Längsrichtung in der Richtung des Aufnahmegehäuses (30) erstreckt, wobei die Gewindebohrung (76) der entsprechende Gewindeabschnitt (76) der Führungsstange (38) ist, wobei die Sicherungsmutter (70) ein Gewindeelement (80) aufweist, wobei das Gewindeelement (80) der Gewindeabschnitt (80) der Sicherungsmutter (70) ist und das Gewindeelement (80) angepasst ist, um in die Gewindebohrung (76) derart einzutreten und mit dieser in Eingriff zu kommen, dass die Sicherungsmutter (70) den Aktor (12) entfernbar an der Führungsstange (38) und der Aufnahme (14) befestigt.

17. Anordnung (10) gemäß Anspruch 16, wobei das Gewindeelement (80) in einer ersten Richtung vorgespannt ist.

18. Anordnung (10) gemäß einem der Ansprüche 16 bis 20, wobei sich die Führungsstange (38) in einer Vorwärtsrichtung (F) in den Durchgang (37) erstreckt und die Mutter (70) derart in die Führungsstange (38) eingreift, dass die Mutter (70) gegen eine Führungskontaktfläche (58) des Führungselements (34) drückt, was eine Bewegung der Mutter (70) in einer Rückwärtsrichtung (R) verhindert.

19. Anordnung (10) gemäß Anspruch 18, wobei die Sicherungsmutter (70) eine Mutterbohrung (72) aufweist und sich die Führungsstange (38) in die Mutterbohrung (72) erstreckt.

20. Anordnung (10) gemäß einem der Ansprüche 11 bis 19, wobei der Aktor (12) ein Aktor (12) gemäß einem der Ansprüche 1 bis 4 ist.

21. Anordnung (10) gemäß einem der Ansprüche 11 bis 20, wobei die Aufnahme (14) eine Aufnahme (14) gemäß einem der Ansprüche 5 bis 10 ist.

22. Ein Unterwasserventil (41), das eine Aktoranordnung gemäß einem der Ansprüche 11 bis 21 beinhaltet.

23. Unterwasserventil (41) gemäß Anspruch 22, wobei sich das Ventil auf einer Basisfläche befindet, wobei sich die Führungsstange (38) in Bezug auf die Basisfläche über dem Aufnahmegehäuse (30) befindet und sich das Führungselement (34) in Bezug auf die Basisfläche über dem Aktorgehäuse (14) befindet.

24. Eine Unterwasserventilanordnung, die mindestens ein Unterwasserventil (41) gemäß Anspruch 22 oder 23 beinhaltet.

## Revendications

1. Un actionneur (12) pour une soupape sous-marine à protection cathodique (41) ayant une tige de guidage (38) s'étendant à partir de celle-ci, l'actionneur (12) comprenant :
un boîtier d'actionneur (16) ;
un moteur électrique situé au sein du boîtier d'actionneur (16) ;
un mécanisme d'entraînement (20) conçu pour être entraîné par le moteur électrique et en mesure de venir en prise avec la soupape sous-marine (41) ; et
un élément de guidage (34) sur le boîtier d'actionneur (16), l'élément de guidage (34) comprenant un passage de guidage allongé (37) pour recevoir la tige de guidage (38), l'élément de guidage (34) comprenant au moins un support (42) monté sur le boîtier et un tube (40) soutenu par le support (42) ;
**caractérisé en ce que** le support et le boîtier d'actionneur (16) sont constitués de métal et le support (42) est monté sur le boîtier (16) de telle sorte que des électrons peuvent circuler du support (42) au boîtier d'actionneur (16).

2. L'actionneur (12) de la revendication 1, dans lequel le passage de guidage (37) comprend des ouvertures proximale et distale (50, 52), et l'ouverture distale (52) est pourvue d'une surface de contact effilée vers l'intérieur (58).

3. L'actionneur (12) de la revendication 1 ou de la revendication 2, l'actionneur (12) comprenant un seul élément de guidage (34).

4. L'actionneur (12) de n'importe quelle revendication précédente, dans lequel le passage de guidage allongé (37) contient un élément de retenue (55) en mesure de venir en prise avec une portion de la tige de guidage (38).

5. Un réceptacle (14) pour raccorder un actionneur (12) à une soupape sous-marine à protection cathodique (41), le réceptacle (14) comprenant :
un boîtier de réceptacle (30) ayant des extrémités proximale et distale (31, 33) et une chambre interne, l'extrémité proximale (31) étant en mesure d'être raccordée à un corps de la soupape (41) de telle sorte qu'un élément d'entraînement (32) de la soupape (41) est au moins partiellement situé dans la chambre interne ; et l'extrémité distale (31) étant conçue pour recevoir au moins une partie d'un mécanisme d'entraînement (20) de l'actionneur (12) de telle sorte que le mécanisme d'entraînement (20) et l'élément d'entraînement (32) viennent en prise au sein de la chambre interne ; et
une tige de guidage (38) sur le boîtier de réceptacle (30), la tige de guidage (38) s'étendant parallèlement au boîtier de réceptacle (30) ;
**caractérisé en ce que** le boîtier de réceptacle (30) et la tige de guidage (38) sont constitués de métal, et la tige de guidage (38) est montée sur le boîtier de réceptacle (30) de telle sorte qu'un courant d'électrons peut circuler du boîtier de réceptacle (30) à la tige de guidage (38).

6. Le réceptacle (14) de la revendication 5, dans lequel la tige de guidage (38) est pourvue d'une portion filetée (76) pour venir en prise avec une portion filetée (80) correspondante d'un écrou de verrouillage.

7. Le réceptacle (14) de la revendication 6, dans lequel la tige de guidage (38) a une extrémité libre (78) éloignée du boîtier de réceptacle (30), dans lequel la portion filetée (76) est un alésage fileté (76) qui s'étend longitudinalement dans la direction du boîtier de réceptacle (30) à partir de l'extrémité libre (78).

8. Le réceptacle (14) de n'importe lesquelles des revendications 5 à 7, le réceptacle (14) comprenant une seule tige de guidage (38).

9. Le réceptacle (14) de n'importe lesquelles des revendications 5 à 8, dans lequel la tige de guidage (38) a un passage interne (94) ayant une entrée en mesure d'être raccordée (95) à une source de fluide anti-calcification et au moins une sortie (96) sur la surface externe de la tige.

10. Le réceptacle (14) de la revendication 9, dans lequel l'au moins une sortie (96) est espacée longitudinalement de l'extrémité libre (78) de la tige (38).

11. Un ensemble actionneur (10) pour une soupape sous-marine à protection cathodique (41), comprenant :
un actionneur (12) comprenant :
un boîtier d'actionneur (16) ;
un moteur électrique situé au sein du boîtier d'actionneur (16) ; et
un mécanisme d'entraînement (20) conçu pour être entraîné par le moteur
électrique et en mesure de venir en prise avec la soupape sous-marine (41) ; et un réceptacle (14) comprenant : un boîtier de réceptacle (30) ayant des extrémités proximale et distale (31, 33) et
une chambre interne, l'extrémité proximale (31) étant en mesure d'être raccordée à un corps de la soupape (41) de telle sorte qu'un élément d'entraînement (32) de la soupape (41) est au moins partiellement situé dans la chambre interne ; et l'extrémité distale (33) étant conçue pour recevoir au moins une partie du mécanisme d'entraînement (20) de l'actionneur (12) de telle sorte que le mécanisme d'entraînement (20) et l'élément d'entraînement (32) viennent en prise au sein de la chambre interne ; et
un élément de guidage (38) sur le boîtier d'actionneur (16), l'élément de guidage (38) comprenant un passage de guidage (37) allongé ; et une tige de guidage (38) sur le boîtier de réceptacle (30), la tige de guidage (38) s'étendant parallèlement au boîtier de réceptacle (30) et étant assujettie de manière amovible au sein du passage de guidage (37) de l'actionneur (12) ;
**caractérisé en ce que** chacun(e) du boîtier d'actionneur (16), du boîtier de réceptacle (30), de l'élément de guidage (34) et de la tige de guidage (38) est constitué(e) de métal, l'élément de guidage (34) et la tige de guidage (38) étant montés sur leurs boîtiers (16, 30) respectifs et la tige de guidage (38) étant assujettie au sein du passage (37) de telle sorte qu'un courant d'électrons peut circuler du boîtier de réceptacle (30) au boîtier d'actionneur (16) via la tige de guidage (38).

12. L'ensemble (10) de la revendication 11, dans lequel la tige de guidage (38) a un passage interne (94) ayant une entrée (95) en mesure d'être raccordée à une source de fluide anti-calcification et au moins une sortie (96) sur la surface externe de la tige (38), et dans lequel la tige de guidage (38) est assujettie au sein du passage de guidage (37) de telle sorte qu'un espace annulaire (93) est formé entre la tige de guidage (38) et le passage de guidage (37), l'espace annulaire (93) étant en communication avec l'au moins une sortie (96).

13. L'ensemble (10) de n'importe lesquelles des revendications 11 à 12, l'ensemble comprenant un écrou de verrouillage (70) avec une portion filetée (80), la tige de guidage (38) comprenant en outre une portion filetée (76) correspondante, la portion filetée (80) de l'écrou de verrouillage (70) venant en prise avec la portion filetée (76) correspondante de la tige de guidage pour assujettir de manière amovible la tige de guidage (38) au sein du passage (37).

14. L'ensemble (10) de la revendication 13, dans lequel le passage (37) a une entrée (50) et une sortie (52), dans lequel la tige de guidage (38) s'étend à travers le passage (37) de telle sorte qu'une portion saillante (74) de la tige de guidage (38) s'étend au-delà de la sortie (52) du passage (37) et l'écrou de verrouillage (70) vient en prise avec la partie saillante (74) de la tige de guidage (38) de telle sorte que l'écrou de verrouillage (70) s'appuie contre l'élément de guidage (34) pour assujettir de manière amovible la tige de guidage (38) au sein du passage (37).

15. L'ensemble (10) de la revendication 13 ou de la revendication 14, dans lequel le passage de guidage (37) comprend des ouvertures proximale et distale (50, 52) et l'ouverture distale (52) est pourvue d'une surface de contact effilée vers l'intérieur (58), l'écrou de verrouillage (70) comprenant des première et deuxième extrémités (86, 88) et une surface de contact effilée vers l'extérieur (90) qui s'effile vers l'extérieur depuis la première extrémité (86) de l'écrou de verrouillage (70) vers la deuxième extrémité (88) de l'écrou de verrouillage (70), la surface de contact effilée vers l'extérieur (58) étant en contact avec la surface de contact effilée vers l'intérieur (58).

16. L'ensemble (10) des revendications 13 à 15, dans lequel la tige de guidage (38) a une extrémité libre (78) éloignée du boîtier de réceptacle (30), l'extrémité libre (78) ayant un alésage fileté (76) qui s'étend longitudinalement dans la direction du boîtier de réceptacle (30), l'alésage fileté (76) étant la portion filetée (76) correspondante de la tige de guidage (38), l'écrou de verrouillage (70) ayant un élément fileté (80), l'élément fileté (80) étant la portion filetée (80) de l'écrou de verrouillage (70) et l'élément fileté (80) étant conçu pour entrer dans, et venir en prise avec, l'alésage fileté (76) de telle sorte que l'écrou de verrouillage (70) assujettit de manière amovible l'actionneur (12) à la tige de guidage (38) et au réceptacle (14).

17. L'ensemble (10) de la revendication 16, dans lequel l'élément fileté (80) est sollicité dans une première direction.

18. L'ensemble (10) de n'importe lesquelles des revendications 16 à 20, dans lequel la tige de guidage (38) s'étend dans le passage (37) dans une direction vers l'avant (F), et l'écrou (70) vient en prise avec la tige de guidage (38) de telle sorte que l'écrou (70) exerce une pression contre une surface de contact de guidage (58) de l'élément de guidage (34) qui empêche un mouvement de l'écrou (70) dans une direction vers l'arrière (R).

19. L'ensemble (10) de la revendication 18, dans lequel l'écrou de verrouillage (70) a un alésage d'écrou (72) et la tige de guidage (38) s'étend dans l'alésage d'écrou (72).

20. L'ensemble (10) de n'importe lesquelles des revendications 11 à 19, dans lequel l'actionneur (12) est un actionneur (12) conformément à n'importe lesquelles des revendications 1 à 4.

21. L'ensemble (10) de n'importe lesquelles des revendications 11 à 20, dans lequel le réceptacle (14) est un réceptacle (14) conformément à n'importe lesquelles des revendications 5 à 10.

22. Une soupape sous-marine (41) comprenant un ensemble actionneur conformément à n'importe lesquelles des revendications 11 à 21.

23. La soupape sous-marine (41) de la revendication 22, la soupape étant située sur une surface de base, la tige de guidage (38) étant située au-dessus du boîtier de réceptacle (30) par rapport à la surface de base et l'élément de guidage (34) étant situé au-dessus du boîtier d'actionneur (14) par rapport à la surface de base.

24. Un ensemble soupape sous-marine comprenant au moins une soupape sous-marine (41) conformément à la revendication 22 ou à la revendication 23.
